# EUROPEAN PATENT SPECIFICATION

(11) **EP 3 718 101 B1**
(45) Date of publication and mention of the grant of the patent: **20.08.2025**
(21) Application number: 18808089.9
(22) Date of filing: 19.11.2018
(51) Int. Cl.: G09G 5/393, H04N 19/167, H04N 19/129

(54) **MANAGING DISPLAY DATA**
VERWALTUNG VON ANZEIGEDATEN
GESTION DE DONNÉES D'AFFICHAGE

(30) Priority: 29.11.2017 GB 201719877
(43) Date of publication of application: 07.10.2020
(73) Proprietor: DisplayLink (UK) Limited, Cambridge Cambridgeshire CB4 0GH (GB)
(72) Inventor: PARKS, Matthew, Cambridge Cambridgeshire CB25 9QW (GB); COOPER, Patrick David, Cambridge Cambridgeshire CB24 6BG (GB)
(74) Representative: J A Kemp LLP
(86) International application number: PCT/GB2018/053342
(87) International publication number: WO 2019/106336

(56) References cited:
- WO-A1-2016/208241
- GB-A- 2 521 407
- US-A1- 2009 208 122
- US-A1- 2011 105 226
- US-A1- 2011 276 652
- US-A1- 2013 039 593
- US-A1- 2013 101 035
- US-A1- 2014 341 549
- US-A1- 2015 023 409
- US-A1- 2016 217 623
- US-A1- 2017 287 446
- US-A1- 2017 295 373
- US-A1- 2017 318 308
- US-A1- 2018 176 603
- KIRAN MISRA ET AL: "An Overview of Tiles in HEVC", IEEE JOURNAL OF SELECTED TOPICS IN SIGNAL PROCESSING, vol. 7, no. 6, 1 December 2013 (2013-12-01), US, pages 969 - 977, XP055257475, ISSN: 1932-4553, DOI: 10.1109/JSTSP.2013.2271451
- "3rd Generation Partnership Project; Technical Specification Group Services and System Aspects; Virtual Reality (VR) media services over 3GPP; (Release 14)", 27 January 2017 (2017-01-27), XP051218025, Retrieved from the Internet <URL:http://www.3gpp.org/ftp/Meetings_3GPP_SYNC/SA4/Docs/> [retrieved on 20170127]

## Description

### Background

In conventional display systems in which data has been encoded or compressed for transmission across a connection to a display device, the data is then decoded or decompressed on a just-in-time basis in the same order as it is sent to the display panel to physically illuminate the pixels: a process known as rastering. This means that if decoding or decompression is not as fast as rastering, the rastering process can "overtake" the decoding or decompression process and old data will be sent to the display panel. The visual artefacts that can result from this, such as judder and tearing, reduce the quality of the display data and therefore the user's experience, and are especially noticeable in cases such as virtual reality displays.

The time required for transmission, especially wireless transmission, may introduce sufficient latency between the production of data and the end of decoding or decompression that the decoding or decompression process may be stalled while awaiting new data. This makes it more likely that the rastering process will overtake the decoding process.

US 2013/101035 discloses techniques for coding video data including techniques for coding pictures partitioned into tiles, in which each of the plurality of tiles in a picture is assigned to one of a plurality of tile groups. One example method for coding video data comprising a picture that is partitioned into a plurality of tiles comprises coding video data in a bitstream, and coding, in the bitstream, information that indicates one of a plurality of tile groups to which each of the plurality of tiles is assigned. US 2014/341549 discloses an image coding apparatus which divides each of one or more image frames into a plurality of rectangular tiles according to a predetermined tile division method and encodes each tile, the image coding apparatus includes an input unit configured to input from outside, tile division information indicating a divided state of the tiles and a preview area to be used in a preview in which an image is displayed in a smaller size as compared to a size of the frame, a determination unit configured to determine from the tile division information and the preview area to be used in the preview, preview tile to be used in a preview, a generation unit configured to generate tile preview information including identification information of tiles corresponding to the determined preview tile. US 2011/276652 discloses that when image data for frames of a moving image is transmitted from a first computer to a second computer, a region of interest for all of the frames in the moving image is identified by calculations using the image data for at least some of the frames. Coordinates for the region of interest are transmitted. Image data for a first frame and second frame for the region of interest is encoded and transmitted. A region surrounding the region of interest is identified. Coordinates for the region surrounding the region of interest are transmitted. Image data for the first frame for the region surrounding the region of interest is encoded and transmitted, wherein transmission of the encoded image data for the first frame for the region surrounding the region of interest is effected after transmission of encoded image data for both of the first and second frames for the region of interest. US 2017/287446 discloses that foveated rendering based on user gaze tracking may be adjusted to account for the realities of human vision. Gaze tracking error and state parameters may be determined from gaze tracking data representing a user's gaze with respect to one or more images presented to a user. Adjusted foveation data representing an adjusted size and/or shape of one or more regions of interest in one or more images to be subsequently presented to a user may be generated based on the one or more gaze tracking error or state parameters. Foveated image data representing one or more foveated images may be generated with the adjusted foveation data. The foveated images are characterized by level of detail within the one or more regions of interest and lower level of detail outside the one or more regions of interest. The foveated images may then be presented to the user. US 2016/217623 discloses a method for providing an augmented reality display and/or user interface. Such a method may provide an augmented reality display and/or user interface that combines real-world video and a virtual object for presenting augmentation information in connection with a region of the real world video of interest ("region of interest") to a user. The region of interest may be based on a mapping between a designated position on the displayed real-world video, and a real-world and/or a localized map location corresponding to such designated position. US 2009/208122 discloses an image coding apparatus in which a ROI setting unit sets a ROI region in an image. A ROI information coding unit encodes information for specifying the ROI region by referring to difference information between frames. An entropy coding unit entropy-codes the image. A codestream generator generates a codestream in a manner that the coded image and the coded information for specifying a region of interest are included in the codestream. GB 2 521 407 discloses a system in which an image compositor receives image tiles from different application engines independently from each other and combines them into one or more combined image tiles. The received image tiles are combined according to information indicating how the received image tiles are to be combined and located in the final displayed image. A monitor may display the final displayed image, wherein different portions of the monitor are refreshed at different refresh rates, as the combined image tiles are received from the image compositor. The display may have individually addressable and controllable pixels and a pixel memory for each pixel on the monitor for storing a power level for the respective pixel. An application engine may provide an update rate independent of a refresh rate of a monitor. US 2013/039593 discloses an image coding method that includes: dividing a picture into tiles; coding the tiles to generate pieces of coded data each of which corresponds to a different one of the tiles; and generating a bitstream including the pieces of coded data. The coding of the tiles includes: generating a first code string by coding a first tile which is one of the tiles, without referring to coding information used in coding another one of the tiles; and adding a bit string after the first code string to make a bit length of first coded data which is one of the pieces of coded data, a multiple of a predetermined N bits, N being an integer greater than or equal to 2. WO 2016/208241 discloses a mechanism for recovering appropriate decoded video when encoding information, which is for decoding the video, is lost or absent. There is provided an encoding device having: a setting unit which divides each image included in a video to be encoded into a plurality of tiles, and sets, in the image, a partial region including one or more of the plurality of tiles; an encoding unit which encodes, by tile, each image to generate an encoded stream; and a transmission control unit which controls the transmission of the encoded stream to a decoding device which decodes the video. The setting unit sets a reference to tiles other than those for motion compensation to be banned with respect to the tiles included in the partial region, and the transmission control unit restricts the transmission such that only the encoded streams corresponding to the tiles included in the partial region are transmitted after loss or absence of encoding information is detected in the decoding device. US 2011/105226 discloses a method for entering text within a video game application. A system comprises: a video game hosting service to execute a video game in response to user input; a client device to communicate with the video game hosting service over a first communication channel, wherein the client device has a first user input device communicatively coupled thereto, and wherein control signals for the video game are generated in response to input from the first user input device and transmitted from the client device to the video game hosting service over the first communication channel, the video game hosting service controlling a video game in response to receipt of the control signals; a display device communicatively coupled to the client device, the display device to display video of the video game; wherein the video game hosting service further includes program code to open a second communication channel to receive text input, the second communication channel being separate and independent from the first communication channel and usable by a data processing device capable of generating text input, wherein in response to receipt of text input over the second communication channel, the video game hosting service causes the text input to be displayed on the display device communicatively coupled to the client device. US 2015/023409 discloses parallel processing concepts such as wavefront parallel processing, realized with a reduced end-to-end delay by giving up the usual slice concept according to which slices are either coded/decoded completely independent from areas of the picture outside of the respective slice, or at least independent from areas outside the respective slice as far as the entropy coding is concerned, namely in favor of slices of different modes, namely ones called dependent slices which allow for interdependencies across slice boundaries, and others which do not, called normal slices. An article entitled "An Overview of Tiles in HEVC" by Kiran Misra et al, published in IEEE Journal of Selected Topics in Signal Processing, Vol 7, No. 6, 1 December 2013, pages 969-977 describes how the use of tiles in High Efficiency Video Coding divides a picture into independent, rectangular regions. This division increases the "parallel friendliness" by enabling improved coding efficiency for parallel architectures, as compared to previous sliced based methods. Additionally, tiles facilitate improved maximum transmission unit (MTU) size matching, reduced line buffer memory, and additional region-of-interest functionality. In this paper, we introduce the tiles feature and survey the performance of the tool. A tile-based region of interest coding method is also disclosed, US 2017/295373 discloses an HMD device that encodes different portions of an image for display with different encoding characteristics based on a user's predicted area of focus as indicated by one or more of a pose of the HMD device and a gaze direction of the user's eye(s) identified at the HMD device. By employing different encoding characteristics, the HMD device supports relatively high-quality encoding while maintaining a relatively small size of the encoded image to allow for transfer of the image to a display panel at a high frame rate. Thus, the HMD device can encode a portion of the image that is expected to be in the user's area of focus at a high resolution, and encode the portion of the image that is expected to be in the user's peripheral vision at a lower resolution. US 2017/318308 discloses a method that includes intra-refresh encoding each picture of a first set of pictures such that a position of a refresh region for the picture is spatially shifted relative to the position of the refresh region for a previous picture of the first set responsive to determining global motion associated with the first does not exceed a specified threshold. The method further includes intra-refresh encoding each picture of a second set of pictures such that a position of a refresh region for each picture of the second set is fixed to be immediately adjacent to a picture edge that is in a direction of global motion associated with the second set responsive to determining the global motion associated with the second set exceeds the specified threshold. A paper published by the 3^{rd} Generation Partnership Project (3GPP) entitled "3^{rd} Generation Partnership Project; Technical Specification Group Services and System Aspects; Virtual Reality (VR) media services over 3GPP; (Release 14)" discloses using tiled-streaming in HEVC streams, whereby the receiver can choose to decode only a subset of the received video stream depending on the current viewport position and/or device capabilities (e.g. video decoder capabilities).

### Summary

The invention is defined in the independent claims, with optional features being defined in the dependent claims.

The claimed invention is beneficial because it will increase the likelihood that the display data in and surrounding the area of interest will be received and decoded or decompressed in time to be rastered for display on the display panel. This will reduce the effects of tearing, judder and other similar display artefacts on the area of interest.

### Brief Description of the Drawings

Embodiments of the invention will now be more fully described, by way of example, with reference to the drawings, of which:
Figure 1 shows a simplified block diagram of a display system;
Figure 2 shows the probability of a given tile being decoded in time according to a conventional system;
Figure 3 shows the desired probability of a given tile being decoded in time;
Figure 4 shows a method of encoding out of order;
Figures 5a, 5b, 5c, 5d show alternative decoding orders; and
Figure 6 shows a method of decoding during slack time.

### Detailed Description of the Drawings

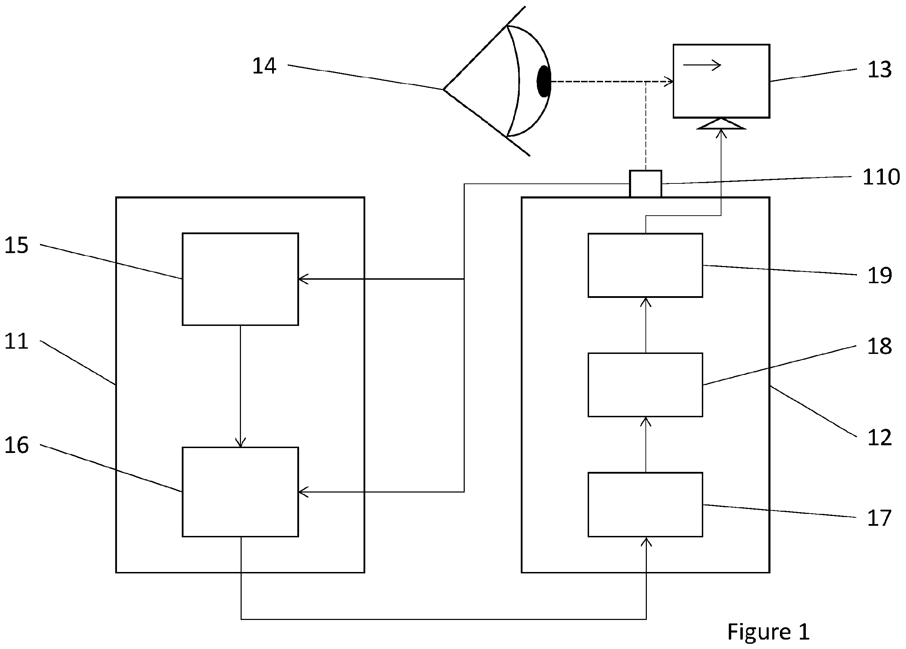

Figure 1 shows a simplified block diagram of a display system incorporating eye-tracking. The system comprises a host computing device [11] which includes an application [15] that produces frames of display data and an encoding engine [16] which encodes the display data for transmission to a connected display control device [12]. The display data is processed in tiles: geometrically-shaped groups of pixels which can be processed as separate units but together form a frame.

The display control device [12] includes a decoding engine [17] which decodes the received display data - i.e. decompresses it and performs relevant colour conversions - as appropriate to the encoding algorithms used. It is connected to a frame buffer [18], where the decoded data is stored prior to being rastered onto a connected display panel [13]. Accordingly, the frame buffer is connected to a rastering engine [19], which is in turn connected to the display panel [13]. There may also be an input buffer in which the received compressed display data is stored prior to decoding, which may be a small flow buffer designed to hold one or two tiles of display data or may be large enough to store an entire compressed frame, but it is not shown here.

The rastering engine [19] produces the electrical signals required to show an image on the display panel [13]. Conventionally, this is done in an order such that the image is updated from left to right, starting at the top row of the display panel [13]. This is shown in the Figure by an arrow representing the raster order. Conventionally, the order of decoding is the same as the raster order.

However, in accordance with an embodiment of the present invention, as the panel [13] is observed by a user [14], his or her point of focus is measured by an eye-tracking module [110] which detects the movements of the user's eye [14] in order to determine where he or she is looking in the image displayed on the display panel [13]. If there is no user [14] present or for any other reason the point of focus cannot be determined, the system may use a default point of focus such as the centre of the image or assume a point of focus based on, for example, a prominent feature in the displayed image.

It is desirable that the point of focus be shown at the highest possible quality as this is the point in which a user [14] is interested and at which his or her eyesight will be most acute. Accordingly, the point of focus is used by the application [15] in generating display data and may also be used by the encoding engine [16] in determining the type and extent of compression to be used. The eye-tracking module [110] is therefore connected to both the application [15] and the encoding engine [16].

If a particular tile or tile group in the display data is not received and decoded by the display control device [12] before it is required by the raster engine [19], the raster engine [19] will, generally, skip that tile or tile group and may display the tile or tile group that was located in the corresponding place in a previous frame. This can result in visual artefacts such as tearing, where part of an image has moved and part remains static. This is disruptive for the user [14]. As a result, a key factor in predicting and improving the quality of a displayed image is the probability that a particular tile or tile group will be received and decoded in time.

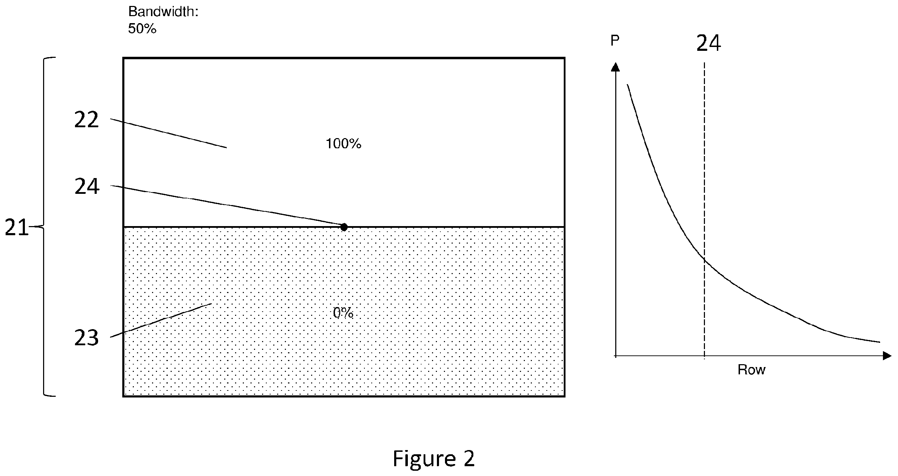

The probability of a particular tile arriving in time can be estimated using the bandwidth available in the connection: if 100% of the maximum bandwidth is available, the probability of a particular tile arriving in time is very high. However, it is rare for 100% of the bandwidth to be available due to other requirements on the connection, interference, etc. This is especially problematic in wireless connections. If less than 100% of the bandwidth is available, the probability of the tile arriving in time may be dependent on its location in the frame. This is shown in Figure 2.

In Figure 2, the bandwidth available is assumed to be 50% of the maximum, and the tiles produced and encoded on the host device [11] are transmitted to the display control device [12] and decoded in the conventional order: beginning at the top left-hand corner of the frame [21] and moving from left to right and top to bottom. The probability of a given row arriving and being decoded before it is required by the rastering engine is shown on the graph on the right, with probability on the Y axis and the row on the X axis, with rows further down in the frame being represented as further to the right on the X axis.

The probability is lower further down the frame [21], being very high for the first rows to arrive [22], after which the available bandwidth is used up and the probability of the last rows in the frame [23] arriving and being decoded in time is extremely low. This is simplistically represented in the Figure by the frame showing the first 50% of the rows in white [22] with a 100% chance of arriving and being decoded in time and the second 50% hatched [23] with a 0% chance of arriving in time.

The frame [21] also includes a dot [24] representing the user's [14] point of focus, which is further represented by a vertical dashed line [24] in the graph. In this example, the user's point of focus [24] is in the default central position, and at least part of the area around it has a low chance of being correctly displayed since there is a low probability of that display data [23] arriving and being decoded in time to be rastered to the display panel [13]. This is likely to result in disruption to the user experience.

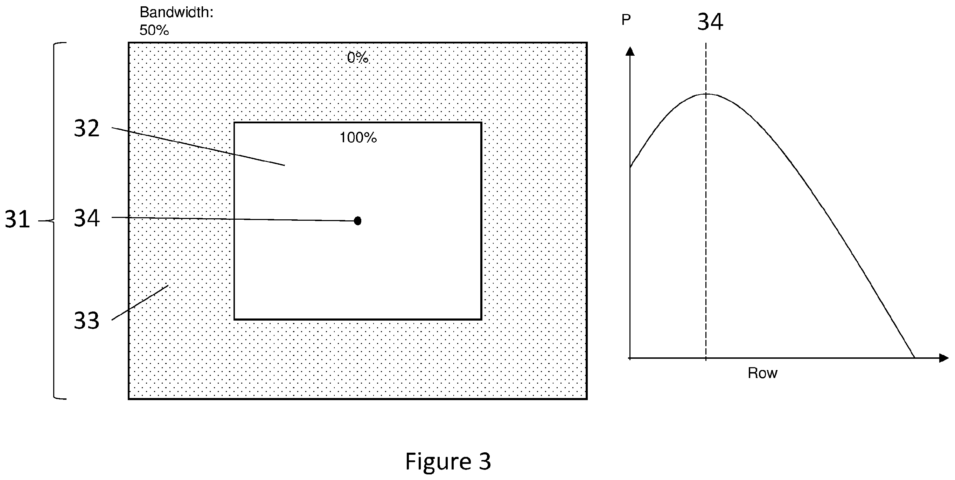

Figure 3 shows a more desirable pattern of probabilities which may be provided by the methods of the invention. In this case, instead of being transmitted, received, and decoded in the conventional raster order, the area [32] surrounding the user's point of focus [34] is decoded first, possibly having also been transmitted first. Even though the bandwidth has not changed from 50% of the maximum, the probability of the rows around the user's point of focus [34], again represented on the graph by a vertical dashed line [34], being decoded in time to be displayed is high while the surrounding area [33] has a lower probability. This is simplistically represented by the frame [31] shown in the Figure, in which a central area [32] is shown in white with a 100% chance of being decoded in time and the outer area of the frame [33] is shown hatched with a 0% chance of being decoded in time.

This is a preferable outcome because it means that the area [32] around the user's point of focus [34] is less likely to suffer from visual artefacts such as tearing, leading to an improved user experience.

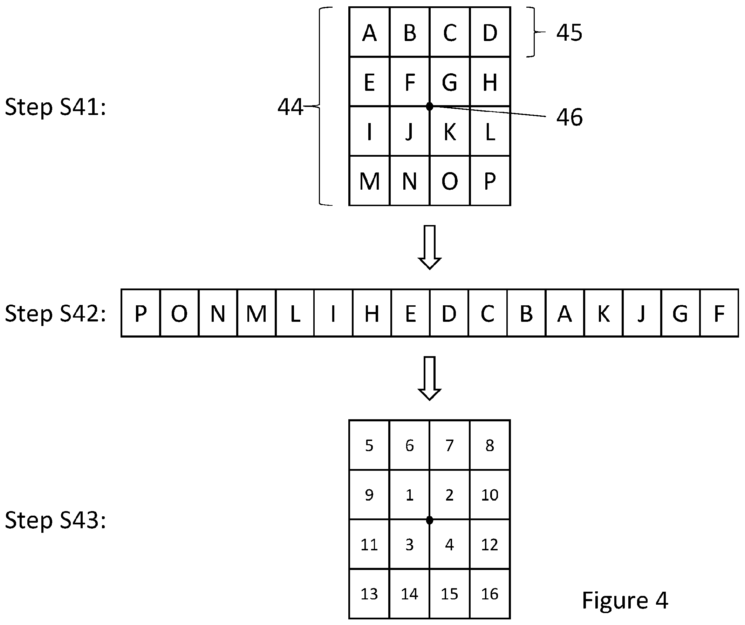

One method of achieving this aim is shown in Figure 4. At Step S41, the application [15] generates a frame of display data [44] which is then divided into tiles [45]. These are labelled in the Figure from A-P in the raster order of left to right and top to bottom. The frame [43] is passed to the encoding engine [16].

The labelling used in Figure 4 represents tile identifications, which are determined by the encoding engine [16] based on the location of each tile [45] in the frame [44], as shown here, and possibly also by other characteristics of the tile [45] such as whether it is identical to a corresponding tile in a previous frame or whether a corresponding tile in a previous frame was given a low priority in the recent past.

At Step S42, the encoding engine [16] encodes the frame [43]. Conventionally, the encoding would be carried out in the raster order, but in this example the encoding is carried out in an order dictated by the location of the user's point of focus [46]. As in Figure 3, this is in the centre of the frame [44], and therefore the four tiles [45F, G, J, K] surrounding the point of focus [46] are prioritised for encoding.

While in this example the encoding order is determined based on the user's point of focus [46], the area of interest could be determined in other ways, such as the location of a prominent object such as text or a fast-moving object to which the user's attention is likely to be drawn. Alternatively, the area of interest could be determined to be an area of the frame [44] which has changed compared to a previous frame.

The encoding order could also be determined based on considerations other than an area of interest. For example, the encoding engine [16] could prioritise particular tiles [45] based on its own actual or estimated capabilities, such that, for example, it encodes tiles [45] that are more complex and likely to take a long time to encode before tiles [45] that are likely to be quick to encode. Similarly, it could determine the encoding order based on the capabilities of the decoding engine [17], applying similar criteria to determine the most appropriate encoding - and therefore transmitting - order. The encoding engine [16] could also determine the encoding order based on actual or estimated delays or losses during the transmission of the data, such that, for example, it prioritises less important tiles [45] if there is currently likely to be a delay in transmission, so that it is not idle but is able to send the more important tiles when the transport mechanism has recovered. Alternatively, if some tiles [45] are more likely than others to be lost in transmission, the encoding engine [16] could prioritise these so that it will be able to re-encode and re-transmit them later if necessary.

Although these methods are based on characteristics other than the tile identification, which is primarily based on the location of the tile [45] within the frame [44], tile identification will still be a consideration, especially where the decoding and/or raster orders are conventional, since the aim is to maximise the probability that each tile [45] will be decoded in time to be displayed.

Furthermore, the encoding engine [16] could determine the encoding order based on the actual or estimated time when a particular tile [45] is to be ultimately output from the frame buffer [18] according to its location, such that, for example, if there has been a delay in encoding it could "skip ahead" in the conventional order and encode tiles [45] that are likely to actually be output rather than continuing to encode tiles [45] that are now too late.

These characteristics may also be used to determine the probability that each individual tile [45], or just the tiles in the area of interest [45F, G, J, K] will be decoded and available in the correct location in the frame buffer [19] in time to be output to the rastering engine [19], especially with regard to the time that will be required for encoding. This probability can then be compared to a threshold, perhaps based on whether or not a tile is in the area of interest to determine whether that probability is acceptable, and thereby used to determine the best encoding order.

In all cases, the encoding engine [16] may change the determination of the encoding order during encoding such that, for example, it may first determine an encoding order based on prioritising an area of interest and encode the tiles [45F, G, J, K] comprising the area of interest first. It would then normally move on to encode the top row of tiles [45A, B, C, D], but there is then a change in the capabilities of the transport mechanism which reduces the chance that these tiles [45A, B, C, D] could be encoded, transmitted, and decoded before the time at which they would be required for output by the rastering engine [19]. Based on this, the encoding engine [16] changes the encoding order to prioritise the remaining tiles [45] that could be encoded, decoded, and output in time: the two remaining tiles [45E, H] in the second row, then so on, and encodes the top row of tiles [45A, B, C, D] last so that they are still available on the display control device [12] if they are needed in future.

For the purposes of this description, a simple determination of the encoding order based on the user's point of focus [46] will be used, as previously described, and the tiles forming the area of interest [45F, G, J, K] are encoded. The remaining tiles [45A, B, C, D, E, H, I, L, M, N, O, P] are then encoded in the conventional order: from left to right and top to bottom, excluding the tiles forming the area of interest [45F, G, J, K] as these have already been encoded. The encoded tiles [45] are transmitted in the encoding order. However, other orders of encoding of the tiles are possible. For example, the tiles could be encoded in a spiral order starting from the central tiles and spiralling outwards so that the tiles furthest from the point of focus are encoded last - if at all.

They may be accompanied by information regarding the encoding order such as a list of tile identifications in the encoding order or information on how the encoding order was determined. The decoding engine [18] can then use this information in determining a decoding order; if the decoding engine [18] expects the tiles to arrive in a conventional order and decodes them accordingly, tiles [45] may be placed in the wrong locations, leading to at least a requirement for later corrections before the decoded frame [44] can be displayed.

Furthermore, if the encoding engine [16] is aware of the status of the connection, it could use this knowledge to calculate the probabilities of different tiles [45] arriving and being decoded in time when the display data is encoded and transmitted in different orders, and could then choose the most beneficial order on the fly. If the locations of the tiles [45] are transmitted together with the tiles [45], the decoding engine [17] could then decode the tiles [45] in any order and put them in the correct locations in the frame buffer [18]. The calculated probabilities could also be used to determine whether dropped tiles [45] should be re-transmitted or skipped entirely, depending on whether they will in fact be received and decoded in time.

At Step S43, the tiles [45] are received by the display control device [12]. Ideally, they are received in the encoding order and can then be decoded in this order and placed in the frame buffer [18] for the raster engine [19], which can then raster the display data to the display panel [13]. The order is shown by the numbering in the Figure: the central four tiles [45] are encoded, transmitted, received, and decoded first and are numbered 1-4. The remaining tiles [45] are then decoded and as such are numbered 5-16.

This will lead to a result like that described in Figure 3, as the probability that the tiles [45] surrounding the point of focus [34/46] will be ready when the rastering engine [19] requires them is higher.

In some cases, the order in which the encoded tiles are received at the display control device [12] may not be the same as the order in which they were transmitted due to delays in transmission, especially wireless transmission. In this case, the decoding engine [17] may determine a decoding order based on the order in which tiles [45] were received regardless of the actual encoding order.

The decoding engine [17] could also or instead use the tile identifications of the received tiles to determine a decoding order which might be the same as the encoding order (if this is not the conventional order) or might be different, based on different considerations or due to changes in circumstance. Accordingly, the received tiles [45] may be stored in a buffer prior to decoding, as previously mentioned. This may be especially useful where the decoding engine [17] is the bottleneck in the process rather than the connection between the host [11] and the display control device [12].

As was the case for the encoding engine [16], the decoding order may be based on the actual or estimated capabilities of the decoding engine [17]. It may also be based on actual or estimated delays or losses in transport, such that, for example, a particular decoding order may be preferable based on other considerations, but if some of the tiles [45] have been delayed or lost the decoding engine [17] instead chooses a different decoding order that prioritises tiles [45] that have arrived.

Naturally, the decoding order may also be based on the area of interest in the same way as the encoding order, as shown in Figure 4, or may be based on the time at which a particular tile [45] will be required by the rastering engine [19] as previously mentioned.

Whether the decoding order is the same as the encoding order or the order in which the tiles [45] were received, or the decoding engine [17] determines a different decoding order, it will use these considerations to maximise the probability of the display data comprising each tile [45] being ready in the appropriate location in the frame buffer [18] before it is required by the rastering engine [19]. Accordingly, it may calculate this probability based on the actual or estimated capabilities of the encoding engine [16] or decoding engine [17], actual or estimated delays or losses in the transport mechanism, the area of interest, and/or the actual or estimated time at which the tile [45] will be output from the frame buffer [18]. Furthermore, as was the case for the encoding order, the determined order may change within a frame as the circumstances change in order to continue maximising this probability.

In any case, if the decoding engine [17] falls behind the requirements of the rastering engine [19] it could use error concealment methods such as blurring display data from a previous frame to hide the differences between the actual and expected data or producing a low-quality version of the missing display data. Since according to the methods of the invention the decoding engine [17] is more likely to fall behind the rastering engine [19] in a low-priority area of the frame, these error correction methods will be less obvious to the user than in current systems.

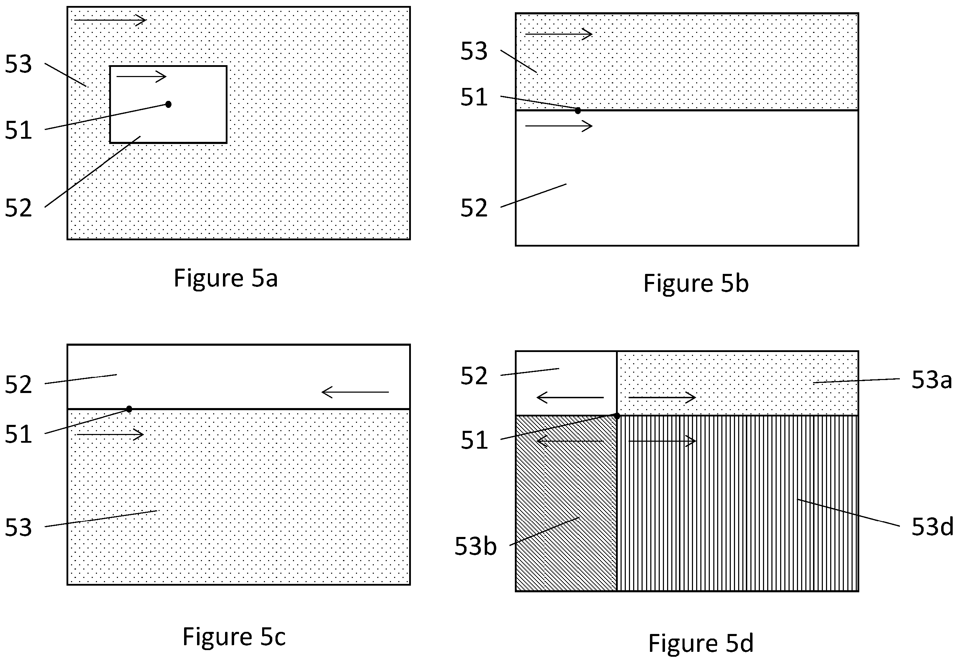

Some examples of decoding orders are shown in Figure 5. Figure 5a shows the example described above, whereby the area [52] around the user's point of focus [51] is prioritised and therefore shown as a white box while the lower-priority outer area [53] of the frame is shown hatched with dots. In these examples, the user's point of focus [51] is not central.

Figure 5b shows a similar example which might be easier to implement using a conventional system as it does not require different parts of rows to be decoded at different times. In this example, the decoding begins at the row containing the user's point of focus [51] and proceeds downwards in the conventional way so that the lower part of the frame [52] is prioritised, indicated by the fact that it is not shaded. When the decoding process reaches the bottom of the frame, it begins again at the top to decode the remainder of the display data [53], indicated by the dotted area, finishing at the row of the user's point of focus [51].

This version of the method is beneficial because it will increase the probability of at least part of the area around the point of focus [51] being decoded in time to be rastered though the remainder of the area around the point of focus [51] has a very low probability of being decoded in time. However, it is likely to be easier to implement than the other versions.

Figure 5c shows a version of the method in which the decoding engine [17] processes the tiles [45] in an unconventional direction. Once again, the area that is prioritised [52] is shown in white and the lower-priority area [53] is shown hatched with dots. In this case, the upper part of the frame [52] is decoded from right to left and bottom to top as if a conventional method is being used with an upside-down frame; the display data could be ordered this way in a buffer. This means that the upper part of the frame [52] can be prioritised with the highest-priority data being the row above the user's point of focus [51]. The lower part of the frame [53] is then decoded in the conventional way beginning at the row below the user's point of focus [51].

Figure 5d shows a version of the method with four stages of decoding centring on the user's point of focus [51]. First the upper-left portion of the frame [52] is decoded with the decode order running from right to left and bottom to top as previously mentioned. This is followed by the upper-right portion of the frame [53a] with the decode order running from left to right and bottom to top, the lower-left portion of the frame [53b] with the decode order running from right to left and top to bottom, and finally the lower-right portion of the frame [53c] with the decoding engine [17] running in the conventional order from left to right and top to bottom.

This order could be pre-programmed, or the ordering of the portions [52, 53] could be flexible based on, for example, the comparative size of the portions [52, 53] to produce a result such as that in Figure 5d where the portions [52, 53] are decoded in order of increasing size.

These decoding orders could be achieved by re-ordering of the tiles [45] as they are encoded and transmitted as described in Figure 4. Alternatively, the decoding engine [17] could act as if there are multiple displays of varying size connected to it such that the display data for each portion [52, 53] of the frame is stored in a different buffer and the decoding engine [17] is not aware that it is decoding in an unconventional way. For example, in the version of the method shown in Figure 5c there might be two virtual display panels of which one - representing the upper portion of the frame [52] - is represented as being upside-down. Furthermore, the decoding engine [17] could simply decode the received tiles [45] from an input buffer in any order and place them in the appropriate locations in the frame buffer [18].

However, other orders of decoding of the tiles are possible. For example, the tiles could be decoded in a spiral order starting from the central tiles and spiralling outwards so that the tiles furthest from the point of focus are decoded last - if at all.

Finally, if there are multiple decoding engines [17] or multiple processing cores contained in a single decoding engine [17], multiple portions [52, 53] of the frame could be decoded in parallel rather than sequentially.

In the methods described so far, the raster order is assumed to be conventional. However, if the display device [13] can also be adjusted such that the raster order can be changed, for example if the display device [13] consists of individually-addressable pixels or pixel groups, the raster order may be changed in the same way as the decoding order, possibly to match the decoding order.

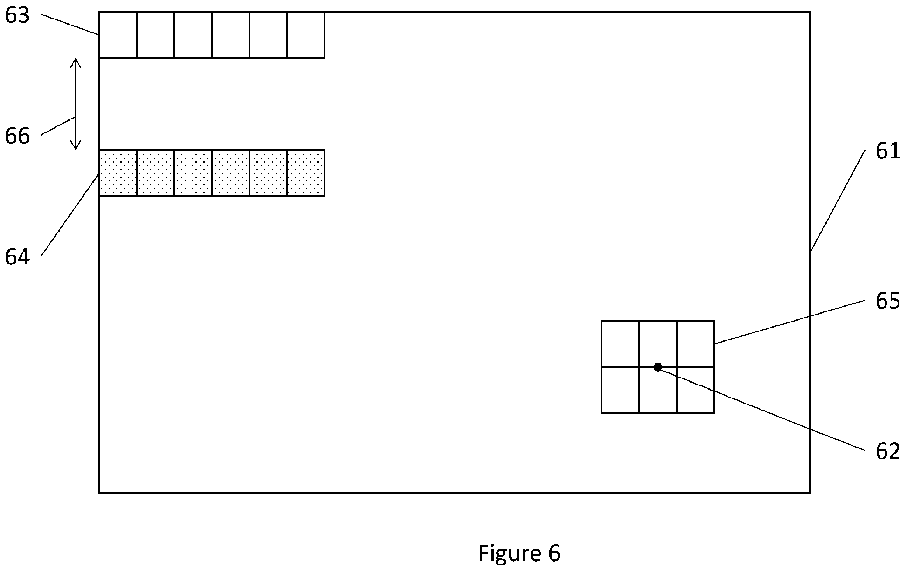

Figure 6 shows another method for re-ordering the decoding of the display data. The Figure shows a frame [61] which will be comprised entirely of tiles of display data but only some are shown here. The first group of tiles [63] are those being currently rastered to the display panel [13] by the rastering engine [19]. The second group [64], which is shown hatched with dots, is the group of tiles currently being decoded. According to the conventional raster order, and hence the conventional decoding order, the group currently being decoded [64] is a few rows ahead of the group currently being rastered. This gap [66] is represented by a double-headed arrow. It may change depending on circumstances, since rastering takes place at a constant speed but the speed at which data is decoded may change depending on factors such as the compression/decompression algorithms used and the complexity of the data.

In this embodiment, the gap [66] between the group of tiles being rastered [63] and the group of tiles being decoded [64] is determined by the decoding engine [17], which can then determine the time interval before the rastering process will reach the row currently being decoded [64]. If there will be an interval longer than a pre-programmed threshold, the decoding engine [17] may then change the decoding order on the fly in order to decode any of the tiles [65] around the user's point of focus [62] that might be available.

This is an example of changing the determined decoding order depending on the capabilities of the decoder, the area of interest, and the time at which a particular tile is to be output from the frame buffer [19] in order to maximise the probability of tiles, especially those in the area of interest [65], being ready when required by the rastering engine [19] even if later in the frame [61] the raster process "overtakes" the decoding process.

Although several particular embodiments have been described in detail above, it will be appreciated that various changes, modifications and improvements can be made by a person skilled in the art without departing from the scope of the present invention as defined in the claims. For example, hardware aspects may be implemented as software where appropriate and vice versa.

## Claims

1. A method of managing display data in a system comprising a host device (11) having an encoder (16), a display device (12) having a frame buffer (18) and a decoder (17), a display (13), and a transport mechanism between the host device (11) and the display device (12) for transporting display data from the host device (11) to the display device (12),
wherein the display device is adapted to receive encoded tiles of display data from the transport mechanism, decode the received tiles of display data, store the decoded tiles of display data in the frame buffer, and output the display data stored in the frame buffer in a raster order to the display,
and wherein the method comprises, at the host device (11):
receiving display data for a frame to be displayed on the display (13), the frame of display data being divided into a plurality of tiles, where each tile is formed of display data for a plurality of pixels to be displayed on the display (13);
determining a tile identification of each tile, the tile identification including a location of the tile within the frame to be displayed;
calculating a probability that display data will be available at a location in the frame buffer (18) prior to the time when the display data from that location is required for output from the frame buffer (18) in the raster order to be displayed and/or that the display data will be available in the frame buffer (18) for an area of interest prior to the time when the display data from the location of the area of interest is required for output from the frame buffer (18) in the raster order to be displayed, wherein calculating the probability is based on one or more of:
actual or estimated capabilities of the encoder at the host device for encoding the tiles,
actual or estimated capabilities of the decoder at the display device for decoding the tiles, and
actual or estimated delays or losses in a transport mechanism between the host device and the display device or changes in the transport mechanism;
determining an encoding order for encoding at least some of the tiles by the encoder (16) based on the calculated probability and the tile identification, so as to increase the probability that display data will be available at the location in the frame buffer (18) prior to the time when the display data from that location is required for output from the frame buffer (18) in the raster order to be displayed and/or that display data will be available in the frame buffer (18) for the area of interest, wherein the calculated probability is compared to a threshold to determine whether that probability is acceptable, and thereby used to determine the best encoding order, or wherein the calculated probabilities of different tiles arriving and being decoded in time when the display data is encoded and transmitted in different orders are compared to choose the most beneficial encoding order on the fly;
encoding at least some of the tiles of display data in the encoding order, wherein the encoding order is not the same as the raster order, wherein the encoding order may change during the encoding process; and
outputting the encoded tiles of display data in the encoding order to the transport mechanism for delivery to the display device (12).

2. A method of managing display data according to claim 1, wherein calculating the probability is further based on one or more of:
an actual or estimated area of interest of the display, the actual or estimated area of interest being determined based on information received from the display device; and
an actual or estimated time when a particular tile is to be output from the frame buffer in raster order to be displayed

3. A method of managing display data according to claim 1 or 2, further comprising either:
receiving information by the host device from the display device regarding an area of the display on which a user is focussed, and determining the area of interest based on the area of the display on which the user is focussed; or
determining an area of the display in which a prominent object is located, and determining the area of interest based on the area of the display in which the prominent object is located; or
determining an area of the display in which there is a lot of change from a previous frame, and determining the area of interest based on the area of the display in which there is a lot of change from a previous frame.

4. A method of managing display data according to any preceding claim, further comprising the host device outputting to the transport mechanism for delivery to the display device, information regarding the encoding order to enable the decoder of the display device to use the information in determining a decoding order for decoding the tiles in the display device.

5. A method of managing display data according to any preceding claim, further comprising, at the display device:
receiving the encoded tiles of display data via the transport mechanism from the host device;
determining the tile identification of each received encoded tile;
decoding the encoded tiles of display data;
storing the display data from the decoded tiles in the frame buffer at the location provided in the tile identification; and
outputting the display data in raster order from the frame buffer for display on the display of the display device.

6. A method of managing display data in a system comprising a host device (11) having an encoder (16), a display device (12) having a frame buffer (18) and a decoder (17), a display (13), and a transport mechanism between the host device (11) and the display device (12) for transporting display data from the host device (11) to the display device (12), the method comprising, at the display device (12):
receiving encoded tiles of display data via the transport mechanism from the host device (11), wherein each tile is formed of display data for a plurality of pixels to be displayed on the display (13) as a frame formed of display data from a plurality of tiles;
decoding the received tiles of display data;
determining a tile identification of each received encoded tile, the tile identification including a location of the tile within the frame to be displayed;
calculating a probability that display data will be available at a location in the frame buffer (18) prior to the time when the display data from that location is required for output from the frame buffer (18) in the raster order to be displayed and/or that the display data will be available in the frame buffer (18) for an area of interest prior to the time when the display data from the location of the area of interest is required for output from the frame buffer (18) in the raster order to be displayed, wherein calculating the probability is based on actual or estimated capabilities of the decoder at the display device for decoding the tiles;
determining a decoding order for decoding at least some of the encoded tiles by the decoder (17), wherein the decoding order may change during a decoding process, and wherein the decoding order is determined based on the calculated probability and the tile identification, wherein the calculated probability is compared to a threshold to determine whether that probability is acceptable and thereby used to determine the best decoding order;
decoding at least some of the encoded tiles of display data in the decoding order, wherein the decoding order is not the same as the raster order, wherein the decoding order may change during the decoding process;
storing the display data from the decoded tiles in the frame buffer (18) at the locations provided in the tile identifications; and
outputting the display data in raster order from the frame buffer (18) for display on the display (13).

7. A method of managing display data according to claim 6, wherein calculating the probability is further based on one or more of:
actual or estimated capabilities of the encoder at the host device for encoding the tiles;
actual or estimated delays or losses in the transport mechanism between the host device and the display device or changes in the transport mechanism;
an actual or estimated area of interest of the display, the actual or estimated area of interest being determined by the display device; and
an actual or estimated time when a particular tile is to be output from the frame buffer in raster order to be displayed.

8. A method of managing display data according to claim 6 or 7, further comprising either:
determining an area of the display on which a user is focussed, and determining the area of interest based on the area of the display on which the user is focussed; or
determining an area of the display in which a prominent object is located, and determining the area of interest based on the area of the display in which a prominent object is located; or
determining an area of the display in which there is a lot of change from a previous frame, and determining the area of interest based on the area of the display in which there is a lot of change from a previous frame.

9. A method of managing display data according to any one of claims 6 to 8, further comprising the display device receiving via the transport mechanism from the host device, information to enable the decoder of the display device to use the information in determining the decoding order for decoding the tiles in the display device.

10. A method of managing display data according to any one of claims 6 to 9, further comprising, at the host device:
receiving the display data;
encoding the tiles of display data; and
outputting the encoded tiles of display data to the transport mechanism for delivery to the display device.

## Patentansprüche

1. Verfahren zum Verwalten von Anzeigedaten in einem System, das umfasst: eine Host-Vorrichtung (11) mit einem Codierer (16), eine Anzeigevorrichtung (12) mit einem Einzelbildpuffer (18) und einem Decodierer (17), eine Anzeige (13) und einen Transportmechanismus zwischen der Host-Vorrichtung (11) und der Anzeigevorrichtung (12) zum Transportieren von Anzeigedaten von der Host-Vorrichtung (11) zur Anzeigevorrichtung (12),
wobei die Anzeigevorrichtung für Folgendes ausgelegt ist: Empfangen codierter Kacheln von Anzeigedaten von dem Transportmechanismus, Decodieren der empfangenen Kacheln von Anzeigedaten, Speichern der decodierten Kacheln von Anzeigedaten in dem Einzelbildpuffer, und Ausgeben der in dem Einzelbildpuffer gespeicherten Anzeigedaten in einer Rasterreihenfolge an die Anzeige,
und wobei das Verfahren an der Host-Vorrichtung (11) umfasst:
Empfangen von Anzeigedaten für ein auf der Anzeige (13) anzuzeigendes Einzelbild, wobei das Einzelbild von Anzeigedaten in eine Vielzahl von Kacheln unterteilt ist, wobei jede Kachel aus Anzeigedaten für eine Vielzahl von auf der Anzeige (13) anzuzeigenden Pixeln gebildet ist;
Bestimmen einer Kachelidentifikation jeder Kachel, wobei die Kachelidentifikation einen Ort der Kachel innerhalb des anzuzeigenden Einzelbilds enthält;
Berechnen einer Wahrscheinlichkeit, dass Anzeigedaten an einem Ort im Einzelbildpuffer (18) vor dem Zeitpunkt verfügbar sind, zu dem die Anzeigedaten von diesem Ort zur Ausgabe aus dem Einzelbildpuffer (18) in der anzuzeigenden Rasterreihenfolge benötigt werden, und/oder dass die Anzeigedaten im Einzelbildpuffer (18) für einen interessierenden Bereich vor dem Zeitpunkt verfügbar sind, zu dem die Anzeigedaten von dem Ort des interessierenden Bereichs zur Ausgabe aus dem Einzelbildpuffer (18) in der anzuzeigenden Rasterfolge benötigt werden, wobei die Berechnung der Wahrscheinlichkeit basierend auf einem oder mehreren der Folgenden erfolgt:
tatsächliche oder geschätzte Fähigkeiten des Codierers an der Host-Vorrichtung zum Codieren der Kacheln,
tatsächliche oder geschätzte Fähigkeiten des Decodierers an der Anzeigevorrichtung zum Decodieren der Kacheln und
tatsächliche oder geschätzte Verzögerungen oder Verluste in einem Transportmechanismus zwischen der Host-Vorrichtung und der Anzeigevorrichtung oder Änderungen im Transportmechanismus;
Bestimmen einer Codierungsreihenfolge zum Codieren mindestens einiger der Kacheln durch den Codierer (16) basierend auf der berechneten Wahrscheinlichkeit und der Kachelidentifikation, um die Wahrscheinlichkeit zu erhöhen, dass Anzeigedaten an dem Ort im Einzelbildpuffer (18) vor dem Zeitpunkt verfügbar sind, zu dem die Anzeigedaten von diesem Ort zur Ausgabe aus dem Einzelbildpuffer (18) in der anzuzeigenden Rasterreihenfolge benötigt werden, und/oder dass Anzeigedaten im Einzelbildpuffer (18) für den interessierenden Bereich verfügbar sind, wobei die berechnete Wahrscheinlichkeit mit einem Schwellenwert verglichen wird, um zu bestimmen, ob diese Wahrscheinlichkeit annehmbar ist, und dadurch verwendet wird, um die beste Codierungsreihenfolge zu bestimmen, oder wobei die berechneten Wahrscheinlichkeiten verschiedener Kacheln, die eintreffen und rechtzeitig decodiert werden, wenn die Anzeigedaten in verschiedenen Reihenfolgen codiert und übertragen werden, verglichen werden, um die vorteilhafteste Codierungsreihenfolge im laufenden Betrieb auszuwählen;
Codieren mindestens einiger der Kacheln von Anzeigedaten in der Codierungsreihenfolge, wobei die Codierungsreihenfolge nicht mit der Rasterreihenfolge identisch ist, wobei sich die Codierungsreihenfolge während des Codierungsprozesses ändern kann; und
Ausgeben der codierten Kacheln von Anzeigedaten in der Codierungsreihenfolge an den Transportmechanismus zur Lieferung an die Anzeigevorrichtung (12).

2. Verfahren zum Verwalten von Anzeigedaten nach Anspruch 1, wobei die Berechnung der Wahrscheinlichkeit ferner basierend auf einem oder mehreren der Folgenden erfolgt:
einem tatsächlichen oder geschätzten interessierenden Bereich der Anzeige, wobei der tatsächliche oder geschätzte interessierende Bereich basierend auf Informationen bestimmt wird, die von der Anzeigevorrichtung empfangen werden; und
einer tatsächlichen oder geschätzten Zeit, zu der eine bestimmte Kachel aus dem Einzelbildpuffer in Rasterreihenfolge ausgegeben werden soll, um angezeigt zu werden

3. Verfahren zum Verwalten von Anzeigedaten nach Anspruch 1 oder 2, das ferner eines der Folgenden umfasst:
Empfangen von Informationen durch die Host-Vorrichtung von der Anzeigevorrichtung bezüglich eines Bereichs der Anzeige, auf den ein Benutzer fokussiert ist, und Bestimmen des interessierenden Bereichs basierend auf dem Bereich der Anzeige, auf den der Benutzer fokussiert ist; oder
Bestimmen eines Bereichs der Anzeige, in dem sich ein auffälliges Objekt befindet, und Bestimmen des interessierenden Bereichs basierend auf dem Bereich der Anzeige, in dem sich das auffällige Objekt befindet; oder
Bestimmen eines Bereichs der Anzeige, in dem es viele Änderungen gegenüber einem vorherigen Einzelbild gibt, und Bestimmen des interessierenden Bereichs basierend auf dem Bereich der Anzeige, in dem es viele Änderungen gegenüber einem vorherigen Einzelbild gibt.

4. Verfahren zum Verwalten von Anzeigedaten nach einem der vorhergehenden Ansprüche, das ferner umfasst, dass die Host-Vorrichtung an den Transportmechanismus zur Lieferung an die Anzeigevorrichtung Informationen bezüglich der Codierungsreihenfolge ausgibt, um es dem Decodierer der Anzeigevorrichtung zu ermöglichen, die Informationen zum Bestimmen einer Decodierungsreihenfolge zum Decodieren der Kacheln in der Anzeigevorrichtung zu verwenden.

5. Verfahren zum Verwalten von Anzeigedaten nach einem der vorhergehenden Ansprüche, das an der Anzeigevorrichtung ferner umfasst:
Empfangen der codierten Kacheln von Anzeigedaten über den Transportmechanismus von der Host-Vorrichtung;
Bestimmen der Kachelidentifikation jeder empfangenen codierten Kachel;
Decodieren der codierten Kacheln von Anzeigedaten;
Speichern der Anzeigedaten aus den decodierten Kacheln in dem Einzelbildpuffer an dem Ort, der in der Kachelidentifikation vorgesehen ist; und
Ausgeben der Anzeigedaten in Rasterreihenfolge aus dem Einzelbildpuffer zur Anzeige auf der Anzeige der Anzeigevorrichtung.

6. Verfahren zum Verwalten von Anzeigedaten in einem System, das umfasst: eine Host-Vorrichtung (11) mit einem Codierer (16), eine Anzeigevorrichtung (12) mit einem Einzelbildpuffer (18) und einem Decodierer (17), eine Anzeige (13) und einen Transportmechanismus zwischen der Host-Vorrichtung (11) und der Anzeigevorrichtung (12) zum Transportieren von Anzeigedaten von der Host-Vorrichtung (11) zur Anzeigevorrichtung (12), wobei das Verfahren an der Anzeigevorrichtung (12) umfasst:
Empfangen von codierten Kacheln von Anzeigedaten über den Transportmechanismus von der Host-Vorrichtung (11); wobei jede Kachel aus Anzeigedaten für eine Vielzahl von Pixeln gebildet ist, die auf der Anzeige (13) als ein Einzelbild angezeigt werden sollen, das aus Anzeigedaten aus einer Vielzahl von Kacheln gebildet ist;
Decodieren der empfangenen Kacheln von Anzeigedaten;
Bestimmen einer Kachelidentifikation jeder empfangenen codierten Kachel, wobei die Kachelidentifikation einen Ort der Kachel innerhalb des anzuzeigenden Einzelbilds enthält;
Berechnen einer Wahrscheinlichkeit, dass Anzeigedaten an einem Ort im Einzelbildpuffer (18) vor dem Zeitpunkt verfügbar sind, zu dem die Anzeigedaten von diesem Ort zur Ausgabe aus dem Einzelbildpuffer (18) in der anzuzeigenden Rasterreihenfolge benötigt werden, und/oder dass die Anzeigedaten im Einzelbildpuffer (18) für einen interessierenden Bereich verfügbar sind, bevor die Anzeigedaten von dem Ort des interessierenden Bereichs für die Ausgabe aus dem Einzelbildpuffer (18) in der anzuzeigenden Rasterfolge benötigt werden, wobei die Berechnung der Wahrscheinlichkeit auf tatsächlichen oder geschätzten Fähigkeiten des Decodierers an der Anzeigevorrichtung zum Decodieren der Kacheln basiert;
Bestimmen einer Decodierungsreihenfolge zum Decodieren mindestens einiger der codierten Kacheln durch den Decodierer (17), wobei sich die Decodierungsreihenfolge während eines Decodierungsprozesses ändern kann, und wobei die Decodierungsreihenfolge basierend auf der berechneten Wahrscheinlichkeit und der Kachelidentifikation bestimmt wird, wobei die berechnete Wahrscheinlichkeit mit einem Schwellenwert verglichen wird, um zu bestimmen, ob diese Wahrscheinlichkeit annehmbar ist, und dadurch verwendet wird, um die beste Decodierungsreihenfolge zu bestimmen;
Decodieren mindestens einiger der codierten Kacheln von Anzeigedaten in der Decodierungsreihenfolge, wobei die Decodierungsreihenfolge nicht mit der Rasterreihenfolge identisch ist, wobei sich die Decodierungsreihenfolge während des Decodierungsprozesses ändern kann;
Speichern der Anzeigedaten aus den decodierten Kacheln im Einzelbildpuffer (18) an den in den Kachelidentifikationen vorgesehenen Orten; und
Ausgeben der Anzeigedaten in Rasterreihenfolge aus dem Einzelbildpuffer (18) zur Anzeige auf der Anzeige (13).

7. Verfahren zum Verwalten von Anzeigedaten nach Anspruch 6, wobei die Berechnung der Wahrscheinlichkeit ferner basierend auf einem oder mehreren der Folgenden erfolgt:
tatsächliche oder geschätzte Fähigkeiten des Codierers an der Host-Vorrichtung zum Codieren der Kacheln;
tatsächliche oder geschätzte Verzögerungen oder Verluste in dem Transportmechanismus zwischen der Host-Vorrichtung und der Anzeigevorrichtung oder Änderungen im Transportmechanismus;
einem tatsächlichen oder geschätzten interessierenden Bereich der Anzeige, wobei der tatsächliche oder geschätzte interessierende Bereich von der Anzeigevorrichtung bestimmt wird; und
einer tatsächlichen oder geschätzten Zeit, zu der eine bestimmte Kachel aus dem Einzelbildpuffer in Rasterreihenfolge ausgegeben werden soll, um angezeigt zu werden.

8. Verfahren zum Verwalten von Anzeigedaten nach Anspruch 6 oder 7, das ferner eines der Folgenden umfasst:
Bestimmen eines Bereichs der Anzeige, auf den ein Benutzer fokussiert ist, und Bestimmen des interessierenden Bereichs basierend auf dem Bereich der Anzeige, auf den der Benutzer fokussiert ist; oder
Bestimmen eines Bereichs der Anzeige, in dem sich ein auffälliges Objekt befindet, und Bestimmen des interessierenden Bereichs basierend auf dem Bereich der Anzeige, in dem sich ein auffälliges Objekt befindet; oder
Bestimmen eines Bereichs der Anzeige, in dem es viele Änderungen gegenüber einem vorherigen Einzelbild gibt, und Bestimmen des interessierenden Bereichs basierend auf dem Bereich der Anzeige, in dem es viele Änderungen gegenüber einem vorherigen Einzelbild gibt.

9. Verfahren zum Verwalten von Anzeigedaten nach einem der Ansprüche 6 bis 8, ferner umfassend, dass die Anzeigevorrichtung über den Transportmechanismus von der Host-Vorrichtung Informationen empfängt, die es dem Decodierer der Anzeigevorrichtung ermöglichen, die Informationen zum Bestimmen der Decodierungsreihenfolge zum Decodieren der Kacheln in der Anzeigevorrichtung zu verwenden.

10. Verfahren zum Verwalten von Anzeigedaten nach einem der Ansprüche 6 bis 9, das an der Host-Vorrichtung ferner umfasst:
Empfangen der Anzeigedaten;
Codieren der Kacheln der Anzeigedaten; und
Ausgeben der codierten Kacheln der Anzeigedaten an den Transportmechanismus zur Lieferung an die Anzeigevorrichtung.

## Revendications

1. Procédé de gestion de données d'affichage dans un système comprenant un dispositif hôte (11) ayant un encodeur (16), un dispositif d'affichage (12) ayant une mémoire tampon d'images (18) et un décodeur (17), un écran d'affichage (13), et un mécanisme de transport entre le dispositif hôte (11) et le dispositif d'affichage (12) pour transporter des données d'affichage depuis le dispositif hôte (11) jusqu'au dispositif d'affichage (12),
dans lequel le dispositif d'affichage est adapté pour recevoir des pavés encodés de données d'affichage en provenance du mécanisme de transport, décoder les pavés reçus de données d'affichage, stocker les pavés décodés de données d'affichage dans la mémoire tampon d'images, et envoyer les données d'affichage stockées dans la mémoire tampon d'images dans un ordre de trame à l'écran d'affichage,
et dans lequel le procédé comprend, au niveau du dispositif hôte (11) :
la réception de données d'affichage pour une image destinée à être affichée sur l'écran d'affichage (13), l'image de données d'affichage étant divisée en une pluralité de pavés, où chaque pavé est formé de données d'affichage pour une pluralité de pixels destinés à être affichés sur l'écran d'affichage (13) ;
la détermination d'une identification de pavé de chaque pavé, l'identification de pavé incluant un emplacement du pavé à l'intérieur de l'image destinée à être affichée ;
le calcul d'une probabilité que des données d'affichage seront disponibles à un emplacement dans la mémoire tampon d'images (18) avant l'instant auquel les données d'affichage provenant de cet emplacement sont requises pour l'envoi depuis la mémoire tampon d'images (18) dans l'ordre de trame pour être affichées et/ou que les données d'affichage seront disponibles dans la mémoire tampon d'images (18) pour une zone d'intérêt avant l'instant auquel les données d'affichage provenant de l'emplacement de la zone d'intérêt sont requises pour l'envoi depuis la mémoire tampon d'images (18) dans l'ordre de trame pour être affichées, dans lequel le calcul du probabilité est basé sur un ou plusieurs éléments parmi :
des capacités réelles ou estimées de l'encodeur au niveau du dispositif hôte pour encoder les pavés,
des capacités réelles ou estimées du décodeur au niveau du dispositif d'affichage pour décoder les pavés, et
des retards ou des pertes réel(le)s ou estimé(e)s dans un mécanisme de transport entre le dispositif hôte et le dispositif d' affichage ou des changements du mécanisme de transport ;
la détermination d'un ordre d'encodage pour encoder au moins certains des pavés par l'encodeur (16) sur la base de la probabilité calculée et de l'identification de pavé, afin d'augmenter la probabilité que des données d'affichage seront disponibles à l'emplacement dans la mémoire tampon d'images (18) avant l'instant auquel les données d'affichage provenant de cet emplacement sont requises pour l'envoi depuis la mémoire tampon d'images (18) dans l'ordre de trame pour être affichées et/ou que des données d'affichage seront disponibles dans la mémoire tampon d'images (18) pour la zone d'intérêt, dans lequel la probabilité calculée est comparée à un seuil pour déterminer si cette probabilité est acceptable, et ainsi utilisée pour déterminer le meilleur ordre d'encodage, ou dans lequel les probabilités calculées de différents pavés arrivant et décodés à temps lorsque les données d'affichage sont encodées et transmises dans des ordres différents sont comparées pour choisir l'ordre d'encodage le plus avantageux à la volée ;
l'encodage d'au moins certains des pavés de données d'affichage dans l'ordre d'encodage, dans lequel l'ordre d'encodage n'est pas le même que l'ordre de trame, dans lequel l'ordre d'encodage peut changer durant le processus d'encodage ; et
l'envoi des pavés encodés de données d'affichage dans l'ordre d'encodage au mécanisme de transport pour la livraison au dispositif d'affichage (12).

2. Procédé de gestion de données d'affichage selon la revendication 1, dans lequel le calcul de la probabilité est en outre basé sur un ou plusieurs éléments parmi :
une zone réelle ou estimée d'intérêt de l'écran d'affichage, la zone réelle ou estimée d'intérêt étant déterminée sur la base d'informations reçues en provenance du dispositif d'affichage ; et
un instant réel ou estimé auquel un pavé particulier doit être envoyé depuis la mémoire tampon d'images dans l'ordre de trame pour être affiché.

3. Procédé de gestion de données d'affichage selon la revendication 1 ou 2, comprenant en outre :
la réception d'informations par le dispositif hôte en provenance du dispositif d'affichage concernant une zone de l'écran d'affichage sur laquelle un utilisateur est concentré, et la détermination de la zone d'intérêt sur la base de la zone de l'écran d'affichage sur laquelle l'utilisateur est concentré ; ou
la détermination d'une zone de l'écran d'affichage dans laquelle un objet important est situé, et la détermination de la zone d'intérêt sur la base de la zone de l'écran d'affichage dans laquelle l'objet important est situé ; ou
la détermination d'une zone de l'écran d'affichage dans laquelle il y a beaucoup de changement par rapport à une image précédente, et la détermination de la zone d'intérêt sur la base de la zone de l'écran d'affichage dans laquelle il y a beaucoup de changement par rapport à une image précédente.

4. Procédé de gestion de données d'affichage selon une quelconque revendication précédente, comprenant en outre l'envoi, par le dispositif hôte, au mécanisme de transport, pour la livraison au dispositif d'affichage, d'informations concernant l'ordre d'encodage pour permettre au décodeur du dispositif d'affichage d'utiliser les informations dans la détermination d'un ordre de décodage pour décoder les pavés dans le dispositif d'affichage.

5. Procédé de gestion de données d'affichage selon une quelconque revendication précédente, comprenant en outre, au niveau du dispositif d'affichage :
la réception les pavés encodés de données d'affichage par l'intermédiaire du mécanisme de transport en provenance du dispositif hôte ;
la détermination de l'identification de pavé de chaque pavé encodé reçu ;
le décodage des pavés encodés de données d'affichage ;
le stockage des données d'affichage provenant des pavés décodés dans la mémoire tampon d'images à l'emplacement fourni dans l'identification de pavé ; et
l'envoi des données d'affichage dans l'ordre de trame depuis la mémoire tampon d'images pour l'affichage sur l'écran d'affichage du dispositif d'affichage.

6. Procédé de gestion de données d'affichage dans un système comprenant un dispositif hôte (11) ayant un encodeur (16), un dispositif d'affichage (12) ayant une mémoire tampon d'images (18) et un décodeur (17), un écran d'affichage (13), et un mécanisme de transport entre le dispositif hôte (11) et le dispositif d'affichage (12) pour transporter des données d'affichage depuis le dispositif hôte (11) jusqu'au dispositif d'affichage (12), le procédé comprenant, au niveau du dispositif d'affichage (12) :
la réception de pavés encodés de données d'affichage par l'intermédiaire du mécanisme de transport en provenance du dispositif hôte (11), dans lequel chaque pavé est formé de données d'affichage pour une pluralité de pixels destinés à être affichés sur l'écran d'affichage (13) en tant qu'image formée de données d'affichage à partir d'une pluralité de pavés ;
le décodage des pavés reçus de données d'affichage ;
la détermination d'une identification de pavé de chaque pavé encodé reçu, l'identification de pavé incluant un emplacement du pavé à l'intérieur de l'image destinée à être affichée ;
le calcul d'une probabilité que des données d'affichage seront disponibles à un emplacement dans la mémoire tampon d'images (18) avant l'instant auquel les données d'affichage provenant de cet emplacement sont requises pour l'envoi depuis la mémoire tampon d'images (18) dans l'ordre de trame pour être affichées et/ou que les données d'affichage seront disponibles dans la mémoire tampon d'images (18) pour une zone d'intérêt avant l'instant auquel les données d'affichage provenant de l'emplacement de la zone d'intérêt sont requises pour l'envoi depuis la mémoire tampon d'images (18) dans l'ordre de trame pour être affichées, dans lequel le calcul du probabilité est basé sur des capacités réelles ou estimées du décodeur au niveau du dispositif d'affichage pour décoder les pavés ;
la détermination d'un ordre de décodage pour décoder au moins certains des pavés encodés par le décodeur (17), dans lequel l'ordre de décodage peut changer durant un processus de décodage, et dans lequel l'ordre de décodage est déterminé sur la base de la probabilité calculée et de l'identification de pavé, dans lequel la probabilité calculée est comparée à un seuil pour déterminer si cette probabilité est acceptable et ainsi utilisée pour déterminer le meilleur ordre de décodage ;
le décodage d'au moins certains des pavés encodés de données d'affichage dans l'ordre de décodage, dans lequel l'ordre de décodage n'est pas le même que l'ordre de trame, dans lequel l'ordre de décodage peut changer durant le processus de décodage ;
le stockage des données d'affichage provenant des pavés décodés dans la mémoire tampon d'images (18) aux emplacements fournis dans les identifications de pavé ; et
l'envoi des données d'affichage dans l'ordre de trame depuis la mémoire tampon d'images (18) pour l'affichage sur l'écran d'affichage (13).

7. Procédé de gestion de données d'affichage selon la revendication 6, dans lequel le calcul du probabilité est en outre basé sur un ou plusieurs éléments parmi :
des capacités réelles ou estimées de l'encodeur au niveau du dispositif hôte pour encoder les pavés ;
des retards ou pertes réel(le)s ou estimé(e)s dans le mécanisme de transport entre le dispositif hôte et le dispositif d'affichage ou des changement du mécanisme de transport ;
une zone réelle ou estimée d'intérêt de l'écran d'affichage, la zone réelle ou estimée d'intérêt étant déterminée par le dispositif d'affichage ; et
un instant réel ou estimé auquel un pavé particulier doit être envoyé depuis la mémoire tampon d'images dans l'ordre de trame pour être affiché.

8. Procédé de gestion de données d'affichage selon la revendication 6 ou 7, comprenant en outre :
la détermination d'une zone de l'écran d'affichage sur laquelle un utilisateur est concentré, et la détermination de la zone d'intérêt sur la base de la zone de l'écran d'affichage sur laquelle l'utilisateur est concentré ; ou
la détermination d'une zone de l'écran d'affichage dans laquelle un objet important est situé, et la détermination de la zone d'intérêt sur la base de la zone de l'écran d'affichage dans laquelle un objet important est situé ; ou
la détermination d'une zone de l'écran d'affichage dans laquelle il y a beaucoup de changement par rapport à une image précédente, et la détermination de la zone d'intérêt sur la base de la zone de l'écran d'affichage dans laquelle il y a beaucoup de changement par rapport à une image précédente.

9. Procédé de gestion de données d'affichage selon l'une quelconque des revendications 6 à 8, comprenant en outre la réception, par le dispositif d'affichage, par l'intermédiaire du mécanisme de transport, en provenance du dispositif hôte, d'informations pour permettre au décodeur du dispositif d'affichage d'utiliser les informations dans la détermination de l'ordre de décodage pour décoder les pavés dans le dispositif d'affichage.

10. Procédé de gestion de données d'affichage selon l'une quelconque des revendications 6 à 9, comprenant en outre, au niveau du dispositif hôte :
la réception des données d'affichage ;
l'encodage des pavés de données d'affichage ; et
l'envoi des pavés encodés de données d'affichage au mécanisme de transport pour la livraison au dispositif d'affichage.
